**Europäisches Patentamt**

**European Patent Office**

**Office européen des brevets**

(19)

(11) Veröffentlichungsnummer: **0 118 741**
**B1**

(12) **EUROPÄISCHE PATENTSCHRIFT**    —

(45) Veröffentlichungstag der Patentschrift:
30.04.86

(51) Int. Cl.⁴: **B 65 G 53/56**

(21) Anmeldenummer: **84101147.1**

(22) Anmeldetag: **04.02.84**

(54) Rohrweiche für Rohrleitungen zur Förderung von Feststoffen oder Dispersionen.

(30) Priorität: **14.02.83 DE 3305079**

(43) Veröffentlichungstag der Anmeldung:
**19.09.84 Patentblatt 84/38**

(45) Bekanntmachung des Hinweises auf die Patenterteilung:
**30.04.86 Patentblatt 86/18**

(84) Benannte Vertragsstaaten:
**AT BE CH DE FR GB LI NL**

(56) Entgegenhaltungen:
**DE - B - 124 455**
**FR - A - 2 153 410**

(73) Patentinhaber: **HOECHST AKTIENGESELLSCHAFT,**
**Postfach 80 03 20, D-6230 Frankfurt am Main 80 (DE)**

(72) Erfinder: **Bungert, Theodor,**
**Joachim-Ringelnatz-Strasse 2, D-6200 Wiesbaden (DE)**

## Beschreibung

Rohrweiche für Rohrleitungen zur Förderung von Feststoffen oder Dispersionen

Die Erfindung betrifft eine Rohrweiche für Rohrleitungen zur Förderung von kleinteiligen Feststoffen oder Dispersionen, die ein Zuleitundsrohr, eine Verteilerkammer und zwei Verteilerrohre enthält.

Derartige Rohrweichen sind bekannt und spielen für die Verteilung von zu fördernden Feststoffen oder solche enthaltenden Dispersionen auf mindestens zwei Rohrleitungen eine wichtige Rolle. Die zu verteilenden Stoffe oder Stoffgemische weisen aber oftmals noch Komponenten auf, die sich gegenüber den Materialien, aus denen diese Rohrweichen oder Teile von ihnen in der Praxis bestehen, mehr oder weniger aggressiv verhalten können; beispielsweise können in diesen Stoffen oder Stoffgemischen aus produktionstechnischen Gründen noch Säuren, Basen oder Salze vorhanden sein, die dann Metalle angreifen (Korrosion) können. Wenn z. B. durch Ausfall von Dichtungen, verringerte Beweglichkeit von Teilen oder Auftreten von Löchern solche unbrauchbar gewordenen Rohrweichen ausgewechselt werden müssen, bedeutet dies nicht nur einen kostenfaktor durch Materialersatz, sondern auch den möglichen Stillstand von heute oftmals kontinuierlich arbeitenden Produktionsanlagen. Aus dem Stand der Technik sind beispielsweise die folgenden Rohrweichen bekannt geworden:

In der DE-AS 11 65 493 wird eine Rohrweiche für die pneumatische Förderung staubförmiger oder körniger Stoffe beschrieben, welche die Form eines Hosenrohrs hat und in dem als dichtender Abschlußkörper eine sich mit Spiel bewegbare Kugel vorgesehen ist.

Aus der DE-AS 12 44 055 ist eine Zwei-Weg-Membranweiche für mit Feststoffen beladene Flüssigkeits- oder Gasströ- me bekannt, bei der im Weichengehäuse zu beiden Seiten der Abzweigstelle zwei zum willkürlichen Sperren des einen oder anderen Zweigweges mit Druckluft beaufschlagbar Membranabschnitte angeordnet sind.

Der Rohrverzweiger für pneumatische Förderanlagen gemäß der DE-AS 12 50 346 ist so aufgebaut, daß ein Zuleitungsrohr in eine Verteilerkammer einmündet, von der eine Mehrzahl von Verteilerrohren ausgehen, die jeweils ein Absperrorgan (Ventil) aufweisen. In die verteilerkammer münden Reinigungsluftdüsen ein, die auf durch Ablagerungen besonders gefährdete Stellen gerichtet sind.

In der DE-OS 14 81 189 wird ein Leitungssystem für die pneumatische Förderung von Feststoffen in einem Trägergas beschrieben, das eine Einlaß- und mindestens zwei Auslaßleitungen aufweist. Jede der Auslaßleitungen enthält ein Ventil, das in einem bestimmten Abstand von der Abzweigung zwischen Einlaß- und Auslaßleitungen angeordnet ist und im Absperrzustand die Ausbildung eines Pfropfens aus dem Feststoff zwischen dem Ventil und der Abzweigung bewirkt. Der Feststoffpfropfen wird entweder beim Öffnen des Ventils von selbst aus der Leitung entfernt oder durch ein Spülgas, das über einen Spülgaseinlaß zwischen Abzweigung und Ventil ins System einge geben wird.

Aus den DE-PSen 15 56 320 und 17 81 388 ist eine Drehrohrweiche zur wahlweisen Verbindung eines ankommenden Rohres mit einem von mehreren abgehenden Rohren über ein Drehrohr bekannt, das mit seinem Abgangsende zur Verschwenkung um die Achse des Zugangsrohres mit der Randzone eines Drehtellers verbunden ist.

Die Rohrweiche für die pneumatische Förderung chemisch aggressiver staubförmiger oder körniger Stoffe gemäß der DE-OS 19 16 581 besteht aus einem hohlzylindrischen Gehäuse und einem innerhalb des Gehäuses drehbar angeordneten zylindrischen Küken. In die Mantelfläche des Gehäuses münden eine Gutzufuhrleitung und mindestens zwei Gutabführleitungen. Das Küken aus billigem Guß (z. B. Aluminiumguß) enthält Kanäle, die von Rohren aus resistentem Werkstoff (z. B. Chromnickelstahl) gebildet werden. Ebenso sind die anderen mit dem Gut in Wechselwirkung tretenden Teile der Rohrweiche aus resistentem Werkstoff gebildet. Zur Abdichtung können zusätzlich noch aufblasbare Schlauchringe vorgesehen werden.

Diese Rohrweichen weisen aber unter Praxisanforderungen immer noch Probleme auf, insbesondere dann, wenn die zu fördernden und zu verteilenden Feststoffe noch feucht sind, d. h. zu Zusammenballungen und/oder Verklebungen neigen, oder die Feststoffe oder Dispersionen noch aggressive Komponenten enthalten. Beispielsweise treten sehr häufig in den Verteilerrohren Verstopfungen auf oder die Absperrorgane schließen nicht mehr dicht. Auch der Einsatz von Schlauchmembranen konnte diese Probleme bisher nicht vollständig beheben, da diese bei den bekannten Anordnungen durch die auf sie aufprallenden Feststoffteilchen mechanisch sehr stark beansprucht werden, so daß ein häufiges Aus- und Wiedereinbauen bzw. Auswechseln der Rohrweichen erforderlich bleibt.

Aufgabe der vorliegenden Erfindung ist es, eine Rohrweiche vorzuschlagen, welche die vorher aufgezeigten Nächteile des Standes der Technik nicht aufweist, d. h. insbesondere auch zur Verteilung von solchen Feststoffen oder Dispersion geeignet ist, welche noch aggressive Komponenten enthalten oder zu Zusammenballungen oder Verklebungen neigen.

Die Erfindung geht aus von der bekannten Rohrweiche für Rohrleitungen zur Förderung von kleinteiligen Feststoffen oder Dispersionen, bei der ein Zuleitungsrohr in eine Verteilerkammer einmündet, zwei Verteilerrohre von dieser ausgünden, und in der Verteilerkammer zwischen dem Zuleitungsrohr und den Verteilerrohren zu beiden Seiten zwei zum willkürlichen Sperren des einen oder des anderen Zweigweges mit Druckluft beaufschlagbare Schläuche angeordnet sind (siehe DE-B-1244055). Die erfindungsgemäße Rohrweiche ist dann dadurch gekennzeichnet, daß das Zuleitungsrohr tangential in eine zylindrische Verteilerkammer einmündet, die Verteilerrohre tangential von der Verteilerkammer ausgehen, und die Verteilerkammer einen Innenzylinder aufweist, auf dem die Schläuche umlaufend angeordnet sind.

Der Begriff "tangential" bedeutet in diesem Zusammenhang, daß die Mittelachse des Zuleitungsrohrs bzw. der Verteilerrohre mit einer Schnittfläche längs der Achse durch die Verteilerkammer einen Winkel von etwa 90 ° bildet bzw. eine gedachte Fortsetzung der oberen Umrißlinie der Rohre in Richtung auf die Verteilerkammer eine Tangente oder eine Parallele zur Tangente am Umfang der Verteilerkammer ist bzw. dieser sehr nahe kommt; insbesondere ist mindestens eines der Rohre, bevorzugt sind alle Rohre, so angeordnet, daß die Mittelachse(n) des Rohres bzw. der Rohre mit der vertikal liegenden Schnittfläche längs der Achse durch die Verteilerkammer einen Winkel von etwa 90° bildet bzw. bilden. In der Praxis hat diese tangentiale Anordnung der Rohre in Bezug auf die zylindrische Verteilerkammer die Auswirkung, daß das zu fördernde Gut aus einem kleinteiligen Feststoff - beispielsweise einem Granulat, Pulver oder Feinstpulver, die auch noch Feuchte und/oder Nebenprodukte enthalten können - oder einer Dispersion - beispielsweise einer Dispersion aus Fasern in einem Lösemittelsystem - im Raum zwischen Außenwand des Innenzylinders und der äußeren Innenwand der zylindrischen Verteilerkammer kreis- bzw. schraubenförmig umläuft. In einer bevorzugten Ausführungsform kann dieses kreis- bzw. schraubenförmige Umlaufen noch dadurch verstärkt werden, daß das eintretende Gut zwangsweise so umlaufen muß. Dies kann beispielsweise dadurch bewirkt werden daß das Zuleitungsrohr zwar tangential in die Verteilerkammer einmündet, jedoch eine gedachte Fortsetzung der oberen Unrißlinie des Zuleitungsrohres in Richtung auf die Verteilerkammer zur Tangente am Umfang der Verteilerkammer nach oben parallel verschoben ist. Der Abstand der oberen Umrißlinie zur Mittelachse der Verteilerkammer nimmt dann ständig ab, bis er mit dem Radius der Verteilerkammer übereinstimmt. Durch die umlaufende Anordnung der mit Druckluft beaufschladbaren Schläuche im nichtsperrenden Zustand auf der Außenwand des im allgemeinen rohrförmigen Innenzylinders tritt das Fördergut im allgemeinen nicht oder nur in untergeordnetem Maße mechanisch mit dem Schlauchmaterial in Wechselwirkung, da es im wesentlichen an oder in der Nähe der äußeren Innenwand der zylindrischen Verteilerkammer umläuft. Um einen der beiden Schläuche in den sperrenden Zustand zu überführen, d.h. einen der beiden Zweigwege abzusperren, wird er mit Druckluft beaufschlagt. Das in die Verteilerkammer eintretende Gut wird so gezwungen, in Richtung auf den anderen Zweigweg auszuweichen, wobei der sperrende Schlauch mit Gut belegt wird und so einen zusätzlichen Schutz gegenüber mechanischer Beanspruchung erhält.

Langzeitversuche zeigen eindeutig, daß die erfindungsgemäße Rohrweiche störungsfrei arbeitet, ohne daß es zu einer starken Beanspruchung der Funktionsteile kommt. Sie weist - verglichen mit dem Stand der Technik - nämlich den Vorteil auf, daß die die verteilende Funktion bewirkenden Teile der Weiche praktisch nicht oder nur in sehr geringem Maße mechanisch und/oder korrosiv beansprucht werden.

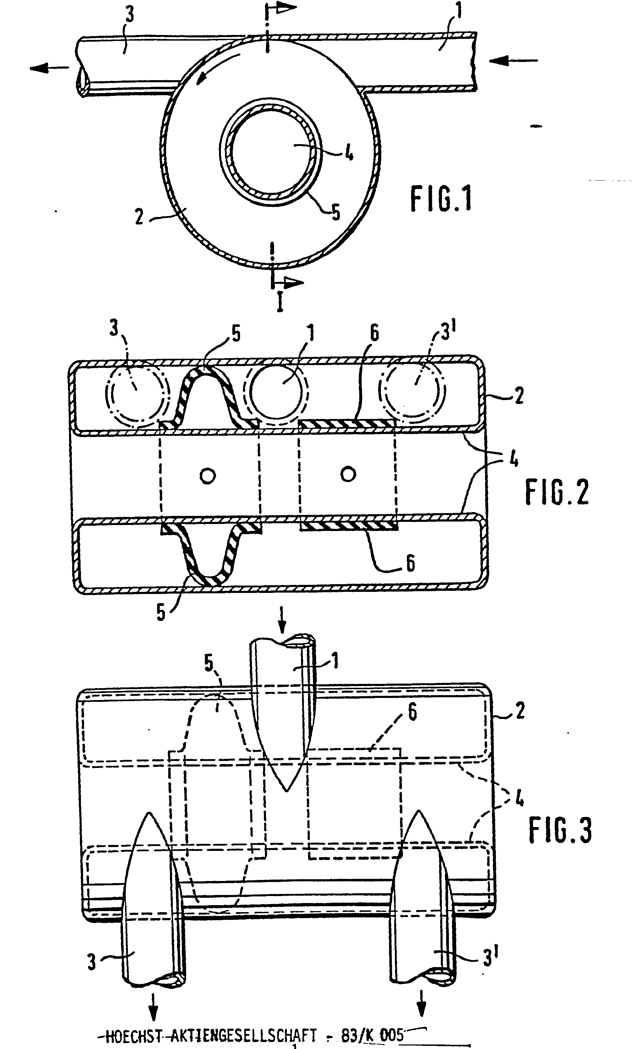

In der Zeichnung sind zwei Ausführungsbeispiele der erfindungsgemäßen Rohrweiche dargestellt. Sie zeigt in
Fig. 1 einen Querschnitt durch die erste Rohrweiche,
Fig. 2 einen Querschnitt durch die erste Rohrweiche in Höhe der Linie I - I der Fig. 1,
Fig. 3 die erste Rohrweiche in Draufsicht,
Fig. 4 einen Querschnitt durch eine zweite Rohrweiche,
Fig. 5 einen Querschnitt durch die zweite Rohrweiche in Höhe der Linie I - I der Fig. 4 und
Fig. 6 die zweite Rohrweiche in Draufsicht.
Nach der ersten Ausführungsform einer erfindungsgemäßen Weiche (Fig. 1 bis 3) wird das zu fördernde und zu verteilende Gut, beispielsweise eine pulverförmige Methylhydroxyethylcellulose aus einer Zwischenstufe eines Produktionsbetriebs mit einem Trockengehalt von etwa 45 bis 50 Gew.-%, einem Feuchteanteil von etwa 50 bis 55 Gew.-%, der im wesentlichen aus Wasser besteht, aber auch noch Anteile von organischen Lösemitteln wie Alkoholen, von Säuren oder Basen enthalten kann, und einem Salzgehalt (z.B. NaCl) von weniger als etwa 1 Gew.-% durch ein Zuleitungsrohr 1 hindurch tangential einer zylindrischen Verteilerkammer 2 zugeführt. Das Gut wird aus der Verteilerkammer 2 durch die beiden Verteilerrohre 3, 3' hindurch ausgeführt, die zu beiden Seiten des Zuleitungsrohres 1 angeordnet sind, und die das Gut in einer zur Eintrittsrichtung gleichen Richtung verläßt; es sind jedoch auch andere Austrittsrichtungen möglich, die sich nach den jeweiligen betrieblichen Erfordernissen richten. Zwischen dem Zuleitungsrohr 1 und den Verteilerrohren 3, 3' befindet sich, umlaufend auf dem rohrförmigen Innenzylinder 4 aufgebracht, zu beiden Seiten je ein mit Druckluft beaufschlagbarer Schlauch 5, 6 aus beispielsweise Gummi, der im allgemeinen einen stationären Anteil auf der der Außenwand des Innenzylinders 4 zugewandten Seite und einen durch Druckluft ausdehnbaren Anteil auf der der Innenwand der Verteilerkammer 2 zugewandten Seite aufweist. Die umlaufende Befestigung der Schläuche 5, 6 kann beispielsweise durch Flansche oder Verklebung erfolgen; es ist auch eine Variante der erfindungsgemäßen Rohrweiche mit einem umlaufenden Schlauch (Membranschlauch) möglich, der lediglich einen durch Druckluft ausdehnbaren Anteil hat und der dann am jeweils linken und rechten Rand umlaufend befestigt ist.

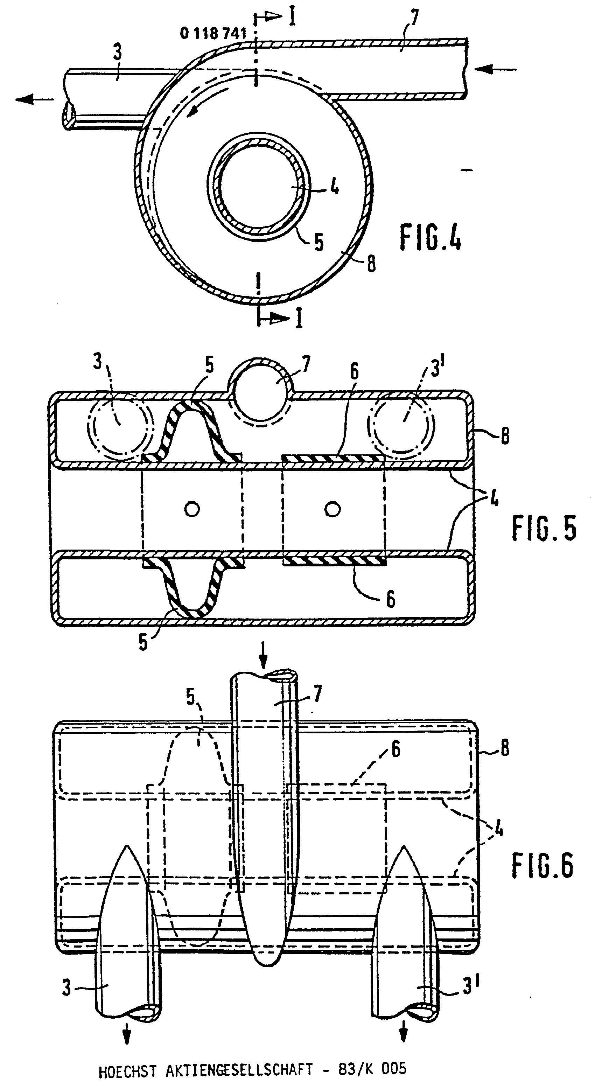

In der zweiten Ausführungsform einer erfindungsgemäßen Weiche (Fig. 4 bis 6) wird das Gut durch ein Zuleitungsrohr 7 hindurch durch zusätzlichen Zwang tangential einer zylindrischen Verteilerkammer 8 zugeführt, da das Zuleitungsrohr 7 so angeordnet wird, daß eine gedachte Verlängerung seiner Mittelachse in etwa eine Tangente an der Verteilerkammer ist. Der zusätzliche Zwang entsteht dadurch, daß durch diese Anordnung das Gut eine "Rinne" innerhalb der Verteilerkammer 8 vorfindet, die in etwa vom oberen Teil der Linie I - I bis zum unteren Teil der Linie I - I verläuft. Die übrigen Vorrichtungsteile können unverändert bleiben.

Durch Luftzutritt zum linken Schlauch 5 wird dieser aufgeblasen und versperrt so dem Gut den Zutritt zum linken Verteilerrohr 3, der rechte Zweigweg zum Verteilerrohr 3' ist frei. Umgekehrt würde durch den Luftzutritt nur zum rechten Schlauch 6 der rechte Zweigweg gesperrt und der linke frei. Werden beide Schläuche 5, 6 mit Druckluft beaufschlagt, so sind beide Zweigwege gesperrt, und, bei Druckfreihalten beider Schläuche 5, 6, sind beide Zweigwege frei. Als Material für die Rohre, die Verteilerkammer und den Innenzylinder kann Edelstahl verwendet werden. Durch eine Rohrweiche, deren Rohre einen Innendurchmesser von 80 mm, deren Verteilerkammer einen Innendurchmesser von 280 mm und deren Innenzylinder einen Außendurchmesser von 200 mm aufweist, können pro h etwa 600 bis 1.000 kg des oben angegebenen Celluloseethers gefördert und verteilt werden.

## Patentanspruch

1. Rohrweiche für Rohrleitungen zur Förderung von kleinteiligen Feststoffen oder Dispersionen, bei der ein Zuleitungsrohr (1,7) in eine Verteilerkammer (2,8) einmündet, zwei Verteilerrohre (3,3') von dieser ausgehen, und in der Verteilerkammer zwischen dem Zuleitungsrohr und den Verteilerrohren zu beiden Seiten zwei zum willkürlichen Sperren des einen oder des anderen Zweigweges mit Druckluft beaufschlagbare Schläuche (5,6) angeordnet sind, dadurch gekennzeichnet, daß das Zuleitungsrohr (1,7) tangential in eine zylindrische Verteilerkammer (2,8) einmündet, die Verteilerrohre (3,3') tangential von der Verteilerkammer ausgehen, und die Verteilerkammer einen Innenzylinder (4) aufweist, auf dem die Schläuche (5,6) umlaufend angeordnet sind.

## Claim:

1. Pipe divider for pipes for conveying solids of small particle size or dispersions, in which a feed pipe (1,7) leads into a distributor chamber, (2,8) two distributor pipes (3,3) lead away from this chamber, and two tubes (5,6) wich can be pressurized by means of compressed air are provided in the distributor chamber between the feed pipe and the distributor pipes, on both sides, for arbitrarily blocking one of the branch paths, whereby the feed pipe (1,7) leads tangentially into a cylindrical distributor chamber (2,8), the distributor pipes (3,3') lead tangentially away from the distributor chamber, and the distributor chamber includes an internal cylinder (4), to which the tubes (5,6) are mounted in a way such that they surround the internal cylinder.

## Revendications

1. Enbranchement de tuyaux pour tuyauteries de transport de matières solides en particules fines ou dp dispersions, dans lequel un tuyau d'alimentation (1, 7) débouche dans une chambre de distribution (2, 8), deux tuyau de distribution (3, 3') partent de cette chambre et, entre le tuyau d'alimentation et les tuyau de distribution, des deux côtes, deux tuyaux flexibles (5,6) pouvant être alimentés en air comprimé pour fermer à volonté l'une ou l'autre des voies derivées, sont montes dans la chambre de distribution, caractérisé en ce que le tuyau d'alimentation (1, 7) débouche tangentiellement dans une chambre de distribution cylindrique (2, 8), les tuyaux de distribution (3, 3') partent tangentiellement de la chambre de distribution et la chambre de distribution comporte un cylindre intérieur (4) sur lequel les tuyaux flexibles (5, 6) sont fixés circonférentiellement.

FIG.1

FIG.2

FIG.3

FIG.4

FIG.5

FIG.6